# DEMANDE DE BREVET EUROPEEN

(11) **EP 1 684 177 A1**
(43) Date de publication de la demande: **26.07.2006**
(21) Numéro de dépôt: 06290141.8
(22) Date de dépôt: 20.01.2006
(51) Int. Cl.: G06F 9/54, H04L 12/24

(54) **Procédé et systeme d'administration dans un environement JMX comprenant une application d'administration et des systemes logiciels à administrer**

(30) Priorité: 25.01.2005 FR 0500764
(71) Demandeur: FRANCE TELECOM, 75015 Paris (FR)
(72) Inventeur: Rivierre, Nicolas, 75005 Paris (FR); Coupaye, Thierry, 38920 Crolles (FR); Horn, Francois, 91800 Brunoy (FR)
(74) Mandataire: Fréchède, Michel

(57) **Abrégé**

Procédé d'administration dans un environnement JMX, des systèmes logiciels (120, 121, 122) à administrer représentés par des premiers MBeans respectifs, et au moins une application d'administration (100, 101), dans lequel les actes d'administration produisent l'exposition de MBeans dans un serveur MBeanServer, caractérisé en ce qu'il est mis en oeuvre au moyen d'un dispositif de médiation et qu'il comprend les étapes suivantes :
- on constitue une structure arborescente de composants d'administration représentent des premiers MBeans, dans laquelle chaque composant est identifié par un nom unique ;
- suite à la réception du nom d'un composant d'administration, le dispositif de médiation envoie une commande déterminée au composant d'administration ainsi identifié, qui, s'il représente un MBean, expose dans le MBeanServer ce MBean ;
- lorsque le composant d'administration possède des composants d'administration descendants dans la structure hiérarchique, le dispositif de médiation propage la commande aux descendants.

## Description

La présente invention se situe dans le domaine de l'administration (management) de systèmes logiciels. Elle concerne plus particulièrement l'administration de plates-formes complexes correspondant typiquement à l'intégration de plusieurs systèmes logiciels comportant diverses ressources et répartis sur un réseau, développés séparément et donc de manière non concertée en vue de leur administration.

Le standard JMX est utilisé pour administrer des systèmes logiciels mis au point au moyen du langage de programmation Java. Les programmes Java devenant exécutables sur tous types d'équipements, depuis les téléphones mobiles et autres équipements embarqués jusqu'aux infrastructures réseaux et serveurs d'applications dans la plate-forme J2EE (Java 2 Enterprise Edition), JMX remplace de plus en plus souvent le standard d'administration SNMP (« Simple Network Management Protocol »).

Le standard JMX définit une architecture, des services et une interface de programmation d'applications (API pour « Application Programming Interface ») pour administrer les ressources de systèmes logiciels. Il a donné lieu à plusieurs réalisations. Le standard JMX est actuellement défini par la spécification Java Specification Request 03 (cf. le site Internet http://java.sun.com/products/JavaManagement/).

En JMX, on n'accède jamais directement à une ressource à administrer. Celle-ci est administrée par l'intermédiaire d'un objet logiciel Java particulier nommé MBean (Management Bean), qui "représente" cette ressource.

On rappelle qu'un objet logiciel est associé à des attributs et des opérations. Il constitue une abstraction d'une ressource, par exemple un équipement, un composant ou un service.

Un MBean est un objet logiciel associé à des attributs et des opérations permettant d'administrer ladite ressource; dans le cadre de la présente invention, ces attributs et opérations d'administration seront appelés "éléments de configuration". Le choix des éléments de configuration particuliers que l'on souhaite associer à une ressource est appelé "instrumentation" de ladite ressource.

Un MBean peut être enregistré (on dit encore « exposé ») dans un serveur d'administration, nommé MBeanServer, sous un nom permettant de l'identifier. Un tel MBeanServer fournit un moyen d'accès standard pour effectuer des actes d'administration sur une ressource représentée par un MBean qu'il expose. En effet, l'exposition donne accès aux attributs et aux opérations d'administration associés à un tel MBean.

Ce concept de MBean est par exemple défini dans les documents EP 909 057 et WO 00/77631.

JMX standardise plusieurs services qui sont également représentés par des MBeans. De tels MBeans particuliers sont par exemple des éléments de contrôle (en anglais, "*monitoring*"), qui émettent une notification dès qu'ils observent qu'un attribut d'une ressource atteint un certain état.

JMX standardise également le moyen d'accéder à un MBeanServer au travers de connecteurs ou d'adaptateurs (Java Specification Request 160, JMX remote). Il est ainsi possible d'administrer un système depuis un navigateur, via le protocole HTTP (« HyperText Transfer Protocol »), un client Java distant, via le mécanisme Java d'invocation distante RMI (« Remote Method Invocation ») ou encore de changer de modèle d'information et de protocole en s'interconnectant avec d'autres standards d'administration tels que SNMP ou WEBM/CIM.

JMX peut être utilisé pour administrer une application Java de façon ad hoc ou standardisée.

Dans le cas ad hoc, les informations exposées aux administrateurs, la convention de désignation des MBeans représentant ces informations, leur répartition dans un ou plusieurs MBeanServers et les connecteurs permettant d'y accéder sont choisis librement.

Dans le cas standardisé, ces choix sont encadrés par un standard. Un cas typique étant le modèle d'administration défini pour la plateforme J2EE (Java Specification Request 77), basé sur JMX, et dont l'objectif est d'harmoniser les services d'administration rendus par différents serveurs d'applications (ex. Websphere de IBM ou Weblogic de BEA). Ce modèle décrit notamment les informations exposées aux administrateurs, comme les concepts J2EE génériques (J2EEServer, J2EEResources, EJB...), et normalise l'accès à ces informations via un composant particulier, nommé Management EJB (MEJB).

Des fonctionnalités, non fournies à l'origine par l'API JMX et sa mise en oeuvre de référence, ont donné lieu à des extensions. On peut notamment mentionner la création dynamique de proxyMBean proposée par les produits connus du domaine que sont JDMK (Sun MicroSystem) ou MX4J (cf. mx4j.sourceforge.net). Cette fonctionnalité permet de mettre en cascade des MBeanServers en exposant, dans un MBeanServer, un proxyMBean représentant un MBean exposé dans un autre MBeanServer. On peut également citer le document WO0077632, qui décrit comment traiter dynamiquement des objets Java, par introspection, pour les rendre manipulables sous forme de MBeans.

La spécification JMX détaille essentiellement l'administration des systèmes logiciels côté serveur. Côté client, elle ne standardise que l'accès aux informations exposées par ces systèmes au travers de MBeanServers ou de connecteurs/adaptateurs/MEJB dans le cas d'accès distribués.

Pour exploiter ces informations, le client, c'est-à-dire l'application d'administration, doit effectuer diverses manipulations comme sélectionner les informations pertinentes ou s'abonner à des services de notifications signalant des événements particuliers (alarmes...). Dans certains cas, il doit gérer l'ajout de services non prévus côté serveur, comme la surveillance (le monitoring) d'un attribut particulier. Il doit également gérer plusieurs connexions si les informations qu'il souhaite exploiter sont réparties sur plusieurs systèmes. Les développements ad hoc qui en résultent sont spécifiques au besoin du client et dépendants des évolutions côté serveur, comme les noms utilisés pour identifier les informations ou le paramétrage des connexions permettant d'y accéder. Certaines consoles d'administration permettent d'automatiser ces manipulations par configuration statique, mais n'autorisent pas de reconfiguration dynamique.

Une difficulté rencontrée dans le cadre de l'administration JMX concerne la possibilité de fédérer l'administration de systèmes cibles en offrant un accès unique permettant d'agréger les informations d'administration en provenance de plusieurs systèmes cibles, pour mener à bien des actions d'administration sur ces systèmes de façon homogène.

Une autre difficulté rencontrée concerne la flexibilité d'une telle administration fédérée, qui doit permettre de s'adapter dynamiquement à l'évolutivité des systèmes cibles et de changer la vue logique d'administration sur ces systèmes en fonction des besoins.

L'invention vise à résoudre ces difficultés.

A cette fin, suivant un premier aspect, l'invention propose un procédé d'administration dans un environnement JMX comprenant une pluralité de systèmes logiciels à administrer, représentés par des premiers MBeans respectifs et au moins une application d'administration, dans lequel les actes d'administration produisent l'exposition de MBeans dans au moins un serveur MBeanServer.

Le procédé d'administration est caractérisé en ce qu'il est mis en oeuvre au moyen d'un dispositif de médiation et qu'il comprend les étapes suivantes :
- on constitue dans le dispositif de médiation une structure hiérarchique de composants d'administration représentant des MBeans parmi lesquels figurent des premiers MBeans et dans laquelle chaque composant d'administration est identifié par un nom unique ;
- suite au moins à la réception du nom d'un composant d'administration de la structure hiérarchique fourni par l'application d'administration, le dispositif de médiation envoie une commande déterminée au composant d'administration identifié par ledit nom ;
- suite à la réception de la commande déterminée, le composant d'administration, s'il représente au moins un MBean, expose dans le MBeanServer au moins ledit MBean ; et
- lorsque ledit composant d'administration possède des composants d'administration descendants dans la structure hiérarchique, le dispositif de médiation propage ladite commande auxdits descendants.

Un composant d'administration est un objet logiciel Java qui peut être manipulé dans un environnement de développement, pour construire une structure hiérarchique en combinaison avec d'autres composants d'administration. Dans cette structure hiérarchique, au moins un premier composant d'administration est un composant de type noeud, c'est-à-dire qu'au moins un second composant d'administration de rang hiérarchique inférieur peut lui être relié par un lien de subordination. Ce second composant est un descendant direct (ou fils) du premier composant. Un troisième composant d'administration qui est un descendant direct du second composant est également un descendant du premier composant d'administration (petit-fils). Plus généralement, si un composant d'administration X est un descendant d'un composant d'administration Y et que ce composant d'administration Y est lui-même un descendant d'un composant d'administration Z, alors le composant X est un descendant du composant Z. L'invention permet ainsi qu'une application d'administration ait, par la simple fourniture du nom d'un composant d'administration, accès à un ensemble de ressources administrées par les MBeans représentés par d'une part le composant d'administration nommé et d'autre part tous les composants d'administration qui en descendent (fils, petits-fils, etc.).

L'invention permet en outre une vue logique d'administration qui réponde aux besoins de l'administrateur, définie par le composant d'administration en position hiérarchique supérieure.

Elle permet d'avoir accès par une seule interface et par la fourniture d'un seul nom, à un ensemble d'informations d'administration en provenance de systèmes logiciels indépendants.

L'invention permet en outre d'ajouter des services relatifs à l'administration de ces systèmes logiciels, en créant des composants d'administration qui représentent de tels services.

Dans un mode de mise en oeuvre avantageux, les composants d'administration sont eux-mêmes des MBeans. La structure hiérarchique est définie en fonction au moins d'éléments de configuration aptes à être exposés de ces MBeans. Cette disposition permet d'administrer à la fois les systèmes logiciels et le dispositif de médiation conformément au standard JMX.

Elle permet en outre un mode de gestion du dispositif de médiation très souple. La vue logique qu'ont les administrateurs sur les ressources à administrer est ainsi modifiable, suite à l'exposition des composants d'administration eux-mêmes dans le MBeanServer.

Dans un mode de réalisation de l'invention, suite au moins à la réception par le dispositif de médiation d'une requête en provenance de l'application d'administration, le dispositif de médiation met en oeuvre des étapes de gestion dans lesquelles :
- les composants d'administration sont exposés dans un serveur MBeanServer ;
- au moins une opération est effectuée parmi la modification d'un composant d'administration, l'ajout ou le retrait d'un composant d'administration dans la structure hiérarchique, ledit ajout ou ledit retrait s'exécutant sur le composant d'administration père dudit composant d'administration ajouté ou retiré.

Ainsi l'administration du dispositif de médiation et/ou la modification de la structure hiérarchique définissant la vue logique fournie à l'administrateur (par exemple la création d'un nouveau service) peuvent aisément être réalisées.

Dans un mode de réalisation avantageux, le nom d'un composant d'administration est fonction du chemin associé dans la structure hiérarchique, ce qui permet d'obtenir des désignations sans ambiguïté et permet une utilisation aisée du dispositif de médiation par plusieurs applications d'administration, et ce indépendamment des modifications effectuées sur les systèmes logiciels, par exemple des modifications effectuées sur des MBeans représentant ces systèmes (des premiers MBeans).

Suivant un second aspect, l'invention propose un système d'administration dans un environnement JMX comprenant une pluralité de systèmes logiciels à administrer, représentés par des premiers MBeans respectifs et au moins une application d'administration, dans lequel les actes d'administration produisent l'exposition de MBeans dans au moins un serveur MBeanServer.

Le système d'administration selon l'invention est caractérisé en ce qu'il comprend en outre un dispositif de médiation comportant :
- des moyens de constitution d'une structure hiérarchique de composants d'administration représentant des MBeans parmi lesquels figurent des premiers MBeans et dans laquelle chaque composant d'administration est identifié par un nom unique ;
- des moyens pour, suite à la réception du nom d'un composant d'administration de la structure hiérarchique fourni par l'application d'administration, envoyer au composant d'administration identifié par ledit nom, une commande déterminée ;
- des moyens pour, que lorsqu'un composant d'administration reçoit ladite commande déterminée, s'il représente au moins un MBean, il expose dans le MBeanServer au moins ledit MBean ; et
- des moyens pour, lorsqu'un composant d'administration ayant reçu ladite commande déterminée, possède des descendants dans la structure hiérarchique, propager ladite commande auxdits descendants.

D'autres particularités et avantages de la présente invention apparaîtront dans la description ci-après d'exemples de réalisation non limitatifs, en référence aux dessins annexés, dans lesquels :
- la figure 1 représente un dispositif de médiation dans un mode de réalisation de l'invention ;
- la figure 2 écrit différentes étapes d'un procédé mettant en oeuvre l'invention.
- la figure 3 détaille les étapes d'exploitation représentées en figure 2 dans un mode de réalisation de l'invention ;
- la figure 4 détaille les étapes de gestion représentées en figure 2 dans un mode de réalisation de l'invention ;
- la figure 5 est un diagramme UML (Unified Modeling Language) représentant la constitution d'un composant d'administration composite dans un mode de réalisation de l'invention ; et
- la figure 6 est un diagramme UML décrivant l'interface d'un proxy sur un objet de management utilisé par le procédé de l'invention.

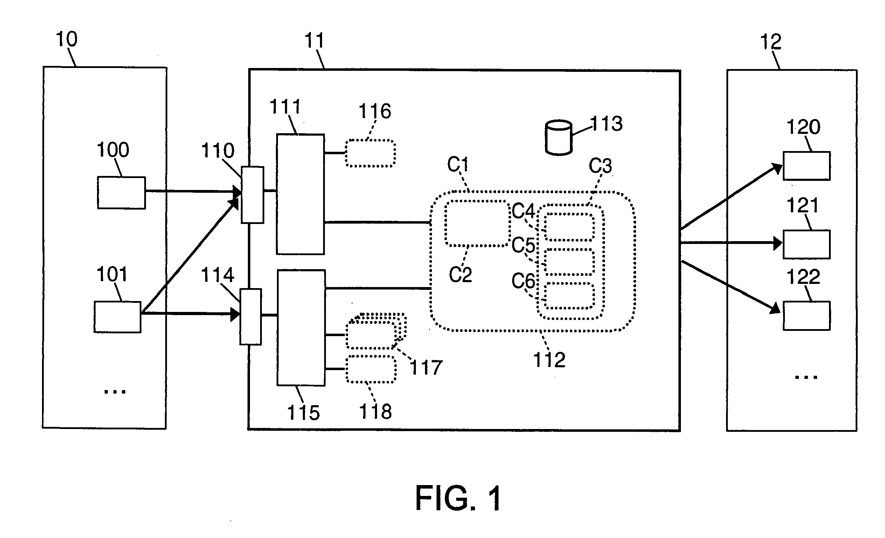

La figure 1 représente un ensemble 12 de systèmes logiciels à administrer. Trois de ces systèmes logiciels sont représentés sur la figure 1, portant les références 120, 121 et 122.

Ces systèmes sont administrés, et en particulier instrumentés, avec le standard JMX de façon indépendante. Le système logiciel 120 est par exemple une application Java représentée par un MBean M0 exposant localement des informations depuis un MBeanServer muni d'un connecteur RMI. Le système 121 est par exemple une application hébergée par un serveur d'applications J2EE (par exemple Websphere de IBM ou Weblogic de BEA) et représentée localement par un MBean M1 exposant des informations depuis un MEJB (Management Entreprise Java Bean). Le système logiciel 122 est par exemple une application Java représentée par un MBean M2 exposant localement des informations depuis un MBeanServer muni d'un connecteur RMI. On ne considère par la suite qu'un seul MBean par système logiciel, mais l'invention s'applique également en présence de plusieurs MBeans par système logiciel.

Sur la figure 1 est représentée un ensemble 10 d'applications d'administration capables de s'interfacer avec des connecteurs-adaptateurs JMX standards. Chacune de ces applications d'administration est destinée à administrer plusieurs des systèmes logiciels 12. Deux de ces applications d'administration 100, 101 sont représentées. Elles peuvent être un navigateur utilisant un adaptateur HTTP, un client Java utilisant un connecteur RMI ou encore un manager SNMP (de type HP OpenView ou IBM Tivoli) utilisant un adaptateur SNMP.

Selon l'invention, on dispose entre l'ensemble d'applications d'administration 10 et l'ensemble de systèmes logiciels à administrer 12, un dispositif de médiation 11. Ce dispositif 11 comporte dans le mode de réalisation ici considéré deux connecteurs-adaptateurs standards 110 et 114.

Le dispositif de médiation 11 comporte en outre deux serveurs d'administration MBeanServers 111 et 115.

Le dispositif de médiation 11 comporte en outre un atelier 117 comportant des usines de création de composants d'administration. Chaque usine permet de créer des composants d'administration d'un type donné, et de les paramétrer. Chaque type est associé à une fonction d'administration particulière, telle que créer des proxy MBeans sur des MBeans distants, ajouter des services sur mesure (ex. un contrôleur chargé de surveiller un attribut d'une ressource particulière) ou encore exploiter dynamiquement des ressources locales. Il est possible d'introduire un nouveau type de composant d'administration dans le dispositif de médiation 11 en ajoutant l'usine adéquate dans l'atelier 117.

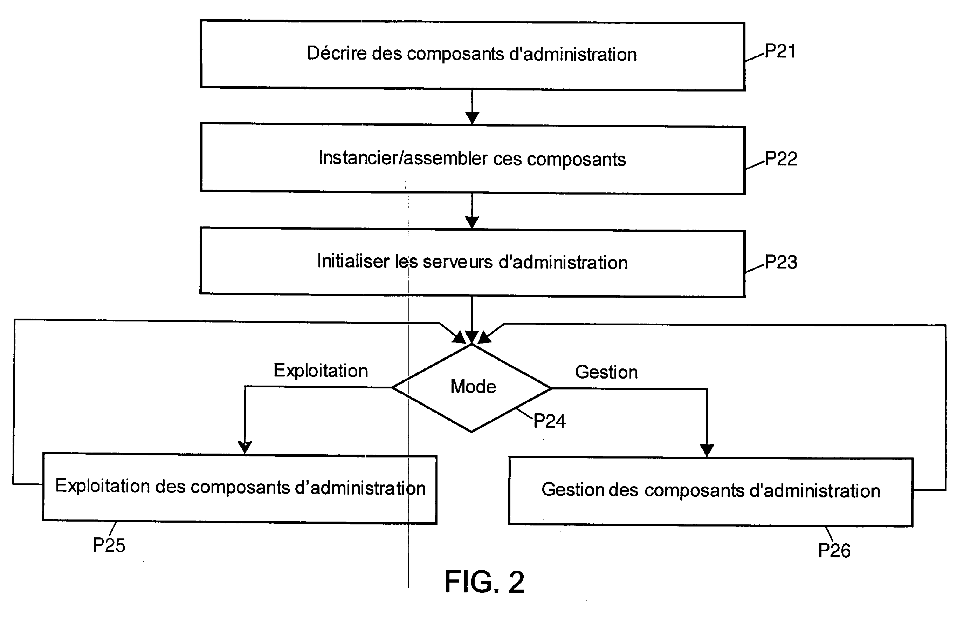

La figure 2 indique les différentes étapes mises en oeuvre dans un mode de réalisation de l'invention, dans le dispositif de médiation 11. Ces étapes correspondent d'abord à un mode d'initialisation, puis à un mode d'exploitation et enfin à un mode de gestion du dispositif de médiation 11.

### Mode d'initialisation :

Dans une étape P21, une vue logique hiérarchique de fonctions d'administration relatives aux systèmes logiciels de l'ensemble de systèmes logiciels 12 est définie.

Cette vue logique est ensuite traduite en une représentation persistante 113 d'une organisation de composants d'administration selon une structure hiérarchique reflétant ladite vue.

Cette représentation persistante permet d'initialiser le dispositif de médiation 11. Elle peut être produite manuellement ou à l'aide du dispositif 11 lui-même, comme décrit ci-dessous et est stockée dans une mémoire du dispositif de médiation 11.

Dans le mode de réalisation proposé, cette représentation persistante 113 est un fichier XML (eXtended Markup Langage) décrivant l'organisation des composants d'administration suivant la structure hiérarchique. Les noeuds de cette hiérarchie sont nommés de façon à former un espace de désignation non ambigu (un noeud ne peut pas avoir deux noeuds fils portant le même nom). Dans une feuille de cette hiérarchie sont incluses les données nécessaires à l'établissement de la chaîne technique permettant l'exposition d'informations représentant, suivant le cas, des proxys sur des informations déjà exposées par un système logiciel de l'ensemble 12 de systèmes logiciels, un service d'administration ajouté par le dispositif de médiation 11 ou tout autre information.

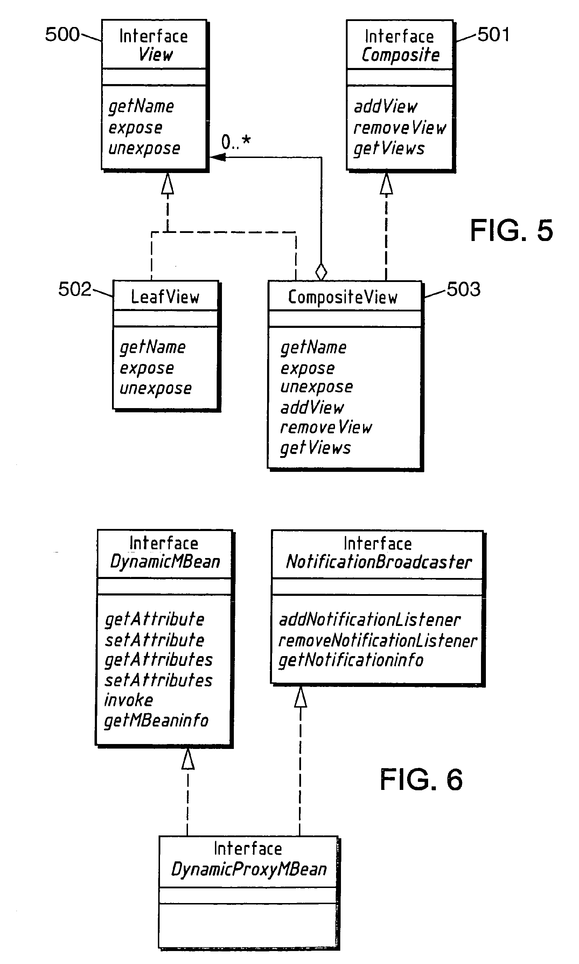

L'étape P22 consiste à parcourir la représentation persistante 113 produite lors de l'étape P21, pour créer un assemblage de composants d'administration reflétant la structure hiérarchique décrite dans cette représentation. Le patron de conception utilisé pour créer et assembler ces composants est illustré en figure 5, et s'inspire des librairies permettant de composer des objets graphiques (par exemple l'API swing de Java). Dans le cas présent, tout composant d'administration est un MBean qui met en oeuvre l'interface métier View 500, dont les deux opérations "expose" et "unexpose" ont pour rôle respectif d'exposer dans un MBeanServer et de retirer d'un MBeanServer, les MBeans représentés par ce composant d'administration.

Chaque feuille de la hiérarchie conduit à créer, à l'aide d'une usine 117, un composant d'administration de type LeafView 502 spécialisé et paramétré avec les données renseignées lors de l'étape P21 pour cette feuille.

Chaque noeud de la hiérarchie - feuilles exceptées - conduit à créer un composant de type CompositeView 503 mettant en oeuvre les interfaces View 500 et Composite 501. Cette deuxième interface permet d'ajouter dans le composant créé (ou d'en retirer) des composants de type View 500. Un composant d'administration (le composant père) qui a un descendant direct (composant fils) selon la structure hiérarchique, est ainsi un composant d'administration défini comme composant contenant le composant fils.

Il est ainsi possible d'organiser les composants d'administration selon la structure hiérarchique produite lors de l'étape P21 et d'appeler les opérations "expose" et "unexpose" de façon uniforme sur tout composant. Dans le cas d'un composant d'administration de type composite, c'est-à-dire un noeud ou un composant père, ces opérations sont propagées au(x) composant(s) d'administration qu'il contient (composant(s) fils). Un composite père valide vérifie, lors de l'ajout d'un nouveau composant fils, que le nom de celui-ci n'est pas déjà utilisé par un composant fils déjà contenu dans le composant père.

L'étape P23 consiste à instance les serveurs MBeanServers 111 et 115 et à y exposer les connecteurs/adaptateurs JMX 110 et 114 permettant à une application d'administration de l'ensemble d'applications 10 d'accéder au dispositif 11 suivant deux modes respectifs.

Le mode d'exploitation est initialisé en exposant dans le MBeanServer 111 un composant d'administration particulier 116, décrit ci-dessous, permettant de contrôler les informations exposées.

Le mode de gestion est initialisé en exposant dans le MBeanServer 115 les composants d'administration particuliers 117 et 118 décrits ci-dessous, permettant de contrôler les actions de reconfiguration du dispositif de médiation 11.

Les étapes P24, P25 et P26 représentent l'utilisation du dispositif de médiation 11 par une application d'administration. Cette application d'administration peut utiliser le dispositif exclusivement en mode d'exploitation ou exclusivement en mode de gestion, ou peut utiliser l'un et l'autre de manière alternative. Dans le mode de réalisation représenté sur la figure 1, l'application cliente 100 accède au dispositif 11 en mode d'exploitation uniquement. L'application cliente 101 accède au dispositif en modes d'exploitation et de gestion.

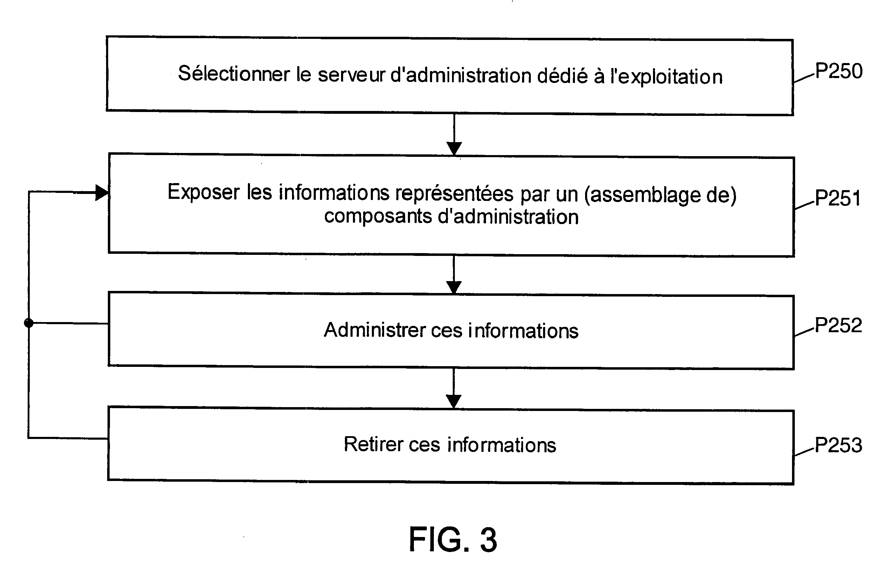

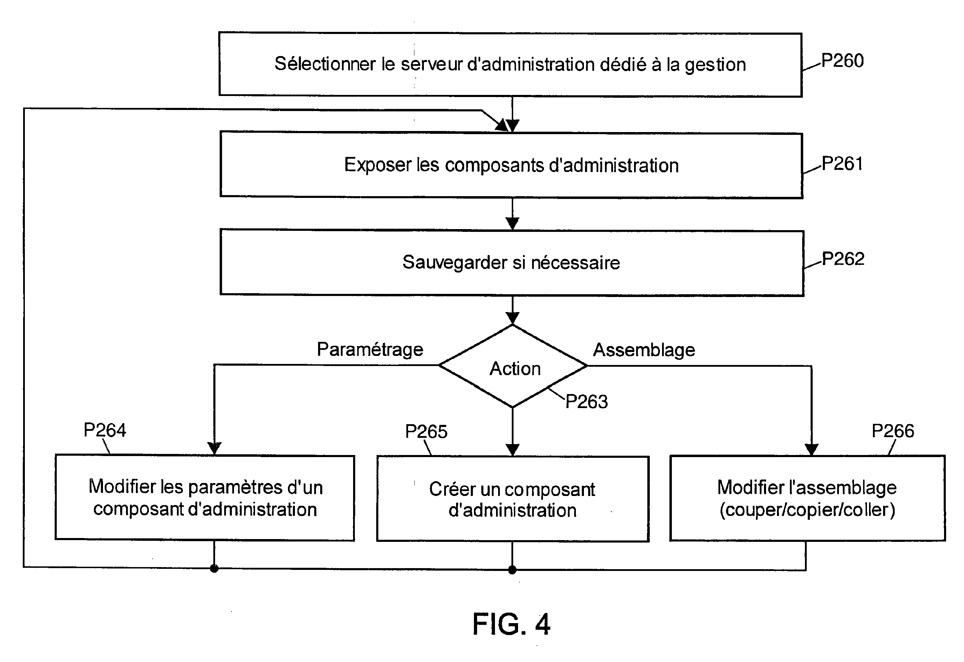

Les étapes des modes d'exploitation et de gestion sont illustrées de façon plus détaillée respectivement dans les figures 3 et 4.

### Mode d'exploitation :

Le procédé utilisé pour mettre en oeuvre le dispositif 11 en mode d'exploitation est illustré par la figure 3.

L'étape P250 consiste, pour une application d'administration de l'ensemble d'applications 10, à accéder au dispositif via le connecteur-adaptateur 110, ce qui provoque la sélection du MBeanServer 111 destiné à l'exploitation

L'étape P251 consiste à exposer dans le MBeanServer 111 les informations représentées par un composant d'administration, en parcourant l'assemblage de composants qu'il contient si celui-ci est composite. Pour réaliser cette étape, l'application d'administration, par exemple l'application d'administration 101, utilise le composant 116 exposé dans le MBeanServer 111 lors de l'étape P23. Ce composant 116 fournit une opération permettant de déclencher l'exposition des MBeans représentés par un composant d'administration. Cette opération prend en argument le nom absolu de ce composant d'administration, fourni par l'application d'administration 101, et permettant de le localiser dans l'assemblage global 112.

Si ce composant d'administration est composite, il propage la commande d'exposition aux composants d'administration qu'il contient, qui eux-mêmes la propagent s'ils sont composites etc. Chaque composant d'administration rencontré lors de cette propagation expose dans le MBeanServer 111 les MBeans qu'il représente, en utilisant une convention de désignation propre à chaque type de composant d'administration. Par exemple, dans le cas de proxy MBeans représentant des MBeans distants, le nom d'un proxy peut être identique au nom du MBean distant qu'il représente.

Par exemple, en référence à la figure 1, lorsque le nom donné en argument par l'application d'administration 101 est le nom du composant d'administration C1 représenté sur la figure 1, la commande d'exposition va être transmise en fait à l'assemblage hiérarchique 112 constitué du composant père C1, des composants fils C2, C3 du composant C1 des composants, puis aux composants fils C4, C5, C6 du composant d'administration C3. Le composant C4 est par exemple un composant feuille représentant le MBean M0 initialement exposés dans le système logiciel 120. Il est donc configuré avec l'adresse de ce système et éventuellement avec un filtre (afin de ne pas tout rapatrier). Lorsqu'il reçoit cette commande d'exposition, il va alors exposer dans le MBeanServer 111 un proxy MBean sur le MBean M0 du système logiciel 120.

L'étape P252 représente la phase d'administration par l'application d'administration 110 des informations alors exposées dans le MBeanServer 111.

A l'issue de cette étape, il est possible d'exposer de nouvelles informations (étape P251) ou d'en retirer (étape P253) du MBeanServeur 111, par le déclenchement par l'application d'administration 110 d'une nouvelle opération sur le composant 116.

L'étape P253 consiste à retirer des informations représentées par un composant d'administration 112, en parcourant l'assemblage de composants qu'il contient si celui-ci est composite. Le procédé est symétrique à celui utilisé par l'étape P251 en utilisant une opération du composant 116 dédiée à cet effet. La convention de désignation utilisée lors de l'étape P251, pour exposer des MBeans dans le MBeanServer 111, est maintenant utilisée pour retrouver ces MBeans et les retirer.

Le dispositif de médiation 11 garantit que l'assemblage hiérarchique global des composants d'administration forme un espace de désignation non ambigu. En effet, il existe un chemin unique menant de la racine de cette hiérarchie jusqu'à un composant. Ce chemin représente le nom absolu du composant qui peut être utilisé par l'application d'administration pour identifier les composant d'administration qu'elle souhaite utiliser.

### Mode de gestion :

Le procédé utilisé pour mettre en oeuvre le dispositif de médiation 11 en mode de gestion est illustré par la figure 4.

Dans une étape P260, l'application d'administration 101 accède au dispositif de médiation 11 via le connecteur-adaptateur 114, ce qui provoque la sélection du MBeanServeur 115 destiné à l'exposition en mode de gestion et le passage du dispositif de médiation 11 en mode de gestion.

L'étape P261 consiste alors à exposer dans le MBeanServer 115 la configuration courante des composants d'administration eux-mêmes de la structure hiérarchique. Chaque composant expose alors ses éléments de configuration, tels qu'un seuil dans le cas d'un composant représentant un contrôleur, un filtre (pattern sur des ObjectName JMX) dans le cas d'un composant devant sélectionner des MBeans, ou tout autre paramètre.

L'exposition de ces informations est possible parce que les composants d'administration sont mis en oeuvre, dans le mode de réalisation considéré, sous forme de MBeans. Cette étape d'exposition est déclenchée par l'application d'administration 101 à l'aide du composant 118 (exposé dans le MBeanServer 115 lors de l'étape P23) qui fournit une opération dédiée à cet effet, ou encore est déclenchée automatiquement par le dispositif de médiation 11 après les étapes P265 et 266 détaillées ci-dessous modifiant la structure de l'assemblage des composants d'administration.

L'étape P262 consiste à sauvegarder la configuration courante des composants d'administration 112. Cette étape, facultative, peut être déclenchée par l'application d'administration 101 à l'aide du composant 118 qui fournit une opération dédiée à cet effet, produisant une représentation persistante de la configuration courante similaire à 113.

L'étape P263 représente un choix sur les actions possibles en mode de gestion.

Dans un mode de réalisation, dans une étape P264, l'application d'administration 101 modifie le paramétrage d'un composant d'administration exposé dans le MBeanServer 115. Il peut s'agir de modifier la valeur d'un seuil dans le cas d'un composant représentant un contrôleur, la valeur d'un filtre (pattern sur des ObjectName JMX) dans le cas d'un composant devant sélectionner des MBeans, ou toute autre valeur de paramètre.

Avantageusement, dans une étape P265, l'application d'administration 101 crée un nouveau composant d'administration à l'aide d'une usine 117 exposée dans le MBeanServer 115 lors de l'étape P23. Chaque usine est dédiée à la création d'un composant d'un type donné et fournit une (ou plusieurs) opération(s) "create" prenant en argument les données permettant de paramétrer ce composant. Par exemple, pour créer un composant représentant un contrôleur JMX, les arguments renseigneront le (ou les) seuil(s) d'alarme, la périodicité d'observation, le nom de l'attribut à observer, le nom des MBeans à observer etc.

Chaque opération "create" d'une usine a également un argument permettant de placer immédiatement le nouveau composant dans l'assemblage 112 de composants d'administration. Avantageusement, cet argument représente un chemin dans la structure hiérarchique de l'assemblage et permet de situer où ajouter le nouveau composant.

La mise en oeuvre de cette opération s'appuie sur le patron de conception "composite" utilisé pour assembler les composants d'administration, et illustré en figure 5. En cas de chemin erroné ou de conflit sur les noms, l'opération "create" échoue.

Dans un mode de mise en oeuvre de l'invention, l'application d'administration 101 réalise une étape P266, qui consiste à modifier l'assemblage courant 112 des composants d'administration par une manipulation de type "couper/copier/coller" s'inspirant de l'interface graphique des outils bureautiques. Dans le cas présent, ces manipulations sont déclenchées par l'application d'administration 101 à l'aide du composant 118 qui fournit trois opérations similaires, prenant chacune un argument représentant un chemin dans la structure hiérarchique de l'assemblage de composants. Comme pour la création (étape P265), la mise en oeuvre de ces opérations s'appuie sur le patron de conception "composite" utilisé pour assembler les composants d'administration selon une structure hiérarchique. L'opération "couper" permet de retirer de l'assemblage le composant trouvé en suivant le chemin donné en argument, et de le conserver en mémoire. L'opération "copier" permet de conserver en mémoire le composant trouvé dans l'assemblage en suivant le chemin donné en argument. L'opération "coller" permet d'ajouter dans l'assemblage le dernier composant conservé en mémoire, à l'emplacement trouvé en suivant le chemin donné en argument. En cas de chemin erroné ou de conflit sur les noms, ces opérations échouent.

Toute modification effectuée sur les composants d'administration, lors des étapes P264, P265 et P266 peut être testée immédiatement dans le mode d'exploitation (P25) du dispositif de médiation 11 ou conduire à une sauvegarde de la nouvelle configuration (étape P262).

Ainsi, l'invention, selon le mode d'exploitation, permet d'administrer plusieurs systèmes logiciels 120, 121, 122 en exposant dans le MBeanServer 111 les informations représentées par des composants d'administration.

L'invention permet de créer des composants d'administration correspondant à des fonctions d'administration non prévues par l'instrumentation initiale des systèmes logiciels à administrer. Par exemple, un composant d'administration (composite) peut représenter un service non prévu par une application J2EE (ex. le système logiciel 121), comme le monitoring d'un attribut d'une ressource particulière. Pour ajouter ce service dans le dispositif de médiation 11, il est possible d'assembler, au sein d'un composant d'administration composite, un composant d'administration représentant un proxy sur la ressource distante et un composant d'administration représentant un contrôleur JMX paramétré avec les seuils d'alerte, les noms de l'attribut et du proxy à contrôler. Les composants élémentaires utilisés par cet assemblage sont simples. Un contrôleur est une fonction de base de JMX qu'il suffit de paramétrer à l'aide d'un composant d'administration chargé de l'exposer dans le MBeanServer 111. Une ressource exposée via un MEJB, peut être représentée dans le MBeanServer 111 par un proxy MBean mettant en oeuvre les interfaces "DynamicMBean" et "NotificationBoadcaster" de l'API JMX (cf. figure 6). La mise en oeuvre délègue chacune des opérations de ces deux interfaces à un MEJB renseigné lors de la construction du proxy. Le composant d'administration chargé d'exposer ce proxy a donc les paramètres nécessaires pour créer le contexte JNDI permettant de se connecter au MEJB et pour identifier la ressource par son nom. Des exemples d'assemblage plus complexes, comme la mise en relation de MBeans exposés par des systèmes logiciels indépendants, peuvent également être créés à l'aide du dispositif de médiation 11.

L'invention, selon le mode de gestion permet de reconfigurer dynamiquement le dispositif en exposant les composants d'administration eux-mêmes dans le MBeanServer 115. Ce mode est accédé par un client (ex. 101) via le connecteur-adaptateur (114) et contrôlé par les composants particuliers 117 et 118.

L'accès à ces deux modes est différencié dans le mode de réalisation décrit afin de ne pas mélanger les informations et de permettre d'associer une politique d'accès en fonction de l'application d'administration.

L'invention n'impose pas de distinguer le MBeanServer utilisé en mode d'exploitation - (précédemment décrit via le MBeanServer 111) - de celui utilisé en mode de gestion - (précédemment décrit via le MBeanServer 115). Dans un mode de réalisation particulier, l'accès à chacun de ces deux modes peut être donné par un seul et même MBeanServer.

L'invention ne s'applique pas seulement à un contexte distribué. Dans une réalisation particulière, l'application d'administration 100 ou 101 peut résider dans la même machine virtuelle Java que le dispositif de médiation 11 et accéder directement aux MBeanServers 111 ou 115 via des références Java locales. De même, un composant d'administration de l'assemblage hiérarchique de composants peut représenter des informations sur une application Java locale (résidant dans la même machine virtuelle Java que le dispositif 11) et instrumentée de manière classique avec JMX ou dynamiquement par ce composant (par exemple comme décrit par le brevet WO0077632).

L'invention n'impose pas de finalité aux systèmes logiciels à administrer 12 ou aux applications d'administration 10. La seule hypothèse est qu'ils se conforment au standard d'administration JMX. Dans une réalisation particulière, au moins un système logiciel à administrer (par exemple 122) ou au moins une application d'administration (par exemple 101) peut être un dispositif de médiation similaire à 11.

L'invention n'impose pas de convention de désignation globale pour les MBeans exposés par le dispositif 11. Dans un mode de réalisation particulier, chaque composant d'administration peut ajouter au nom des MBeans qu'il représente son propre nom (par exemple sous forme d'un préfixe ou d'une propriété) dans la structure hiérarchique de composants 112. Cette information, différente pour tout composant feuille, permet d'éviter des collisions de nom avec des MBeans exposés par d'autres composants feuilles.

Ainsi, l'invention propose un dispositif et un procédé de médiation pour administrer des systèmes logiciels instrumentés avec JMX - y compris le dispositif de médiation lui-même construit à l'aide d'un assemblage de MBeans. L'invention évite de dépendre des connexions utilisées côté serveur et ne nécessite pas de développement *ad hoc* pour agréger les informations pertinentes ou ajouter des services d'administration non prévus par les systèmes cibles. Le dispositif est reconfigurable, en ce qu'il permet de changer dynamiquement la vue logique qu'a un administrateur sur les systèmes qu'il administre (en reconfigurant l'assemblage hiérarchique de composants d'administration) et ces fonctions de reconfiguration sont accessibles depuis l'extérieur du dispositif par le même mode d'accès JMX (et non un mode d'accès ad hoc) que le mode d'accès aux systèmes cibles administrés.

## Revendications

1. Procédé d'administration dans un environnement JMX comprenant une pluralité de systèmes logiciels (120, 121, 122) à administrer, représentés par des premiers MBeans respectifs, et au moins une application d'administration (100, 101), dans lequel les actes d'administration produisent l'exposition de MBeans dans au moins un serveur MBeanServer (111, 115), **caractérisé en ce qu'**il est mis en oeuvre au moyen d'un dispositif de médiation (11) et qu'il comprend les étapes suivantes :
- on constitue dans ledit dispositif de médiation (11) une structure hiérarchique de composants d'administration représentant des MBeans parmi lesquels figurent des premiers MBeans et dans laquelle chaque composant d'administration est identifié par un nom unique ;
- suite au moins à la réception du nom d'un composant d'administration de ladite structure hiérarchique fourni par ladite application d'administration (100, 101), le dispositif de médiation (11) envoie une commande déterminée au composant d'administration identifié par ledit nom ;
- suite à la réception de ladite commande déterminée, le composant d'administration, s'il représente au moins un MBean, expose dans ledit MBeanServer (111) au moins ledit MBean ; et
- lorsque ledit composant d'administration possède des composants d'administration descendants dans la structure hiérarchique, le dispositif de médiation (11) propage ladite commande auxdits descendants.

2. Procédé selon la revendication 1, selon lequel les composants d'administration sont eux-mêmes des MBeans, et la structure hiérarchique est définie en fonction au moins d'éléments de configuration aptes à être exposés desdits MBeans.

3. Procédé selon la revendication 2, selon lequel suite à la réception d'au moins une requête en provenance de ladite application d'administration (100, 101), le dispositif de médiation (11) met en oeuvre des étapes de gestion dans lesquelles :
- les composants d'administration sont exposés dans un serveur MBeanServer (115) ; et
- au moins une opération est effectuée parmi la modification d'un composant d'administration, l'ajout ou le retrait d'un composant d'administration dans la structure hiérarchique, ledit ajout ou ledit retrait s'exécutant sur le composant d'administration père dudit composant d'administration ajouté ou retiré.

4. Procédé selon la revendication 3, selon lequel le nom d'un composant d'administration est fonction du chemin associé dans ladite structure hiérarchique

5. Système d'administration dans un environnement JMX comprenant une pluralité de systèmes logiciels (120, 121, 122) à administrer, représentés par des premiers MBeans respectifs, et au moins une application d'administration (100, 101), dans lequel les actes d'administration produisent l'exposition de MBeans dans au moins un serveur MBeanServer (111, 115), **caractérisé en ce qu'**il comprend également un dispositif de médiation (11) comportant :
- des moyens de constitution d'une structure hiérarchique de composants d'administration représentant des MBeans parmi lesquels figurent des premiers MBeans et dans laquelle chaque composant d'administration est identifié par un nom unique ;
- des moyens pour, suite au moins à la réception (11) du nom d'un composant d'administration de la structure hiérarchique fourni par ladite application d'administration (100, 101), envoyer au composant d'administration identifié par ledit nom une commande déterminée ;
- des moyens pour que, lorsqu'un composant d'administration reçoit ladite commande déterminée, s'il représente au moins un MBean, il expose dans le MBeanServer (111) au moins ledit MBean ; et
- des moyens pour, lorsqu'un composant d'administration ayant reçu ladite commande déterminée possède des descendants dans la structure hiérarchique, propager ladite commande auxdits descendants.

6. Système selon la revendication 5, dans lequel les composants d'administration sont eux-mêmes des MBeans, et la structure hiérarchique est définie en fonction au moins de paramètres de configuration aptes à être exposés desdits MBeans.

7. Système selon la revendication 6, comprenant en outre des moyens de gestion pour, suite à la réception par ledit dispositif de médiation (11) d'au moins une requête en provenance de ladite application d'administration (100, 101) :
- exposer des composants d'administration dans un serveur MBeanServer (115) ; et
- effectuer au moins une opération parmi la modification d'un composant d'administration, l'ajout ou le retrait d'un composant d'administration dans la structure hiérarchique, ledit ajout ou ledit retrait s'exécutant sur le composant d'administration père dudit composant d'administration ajouté ou retiré.

8. Programme d'ordinateur pour système d'administration en environnement JMX, ledit programme comprenant des instructions pour mettre en oeuvre, lors d'une exécution du programme par des moyens de traitement dudit système d'administration, les étapes d'un procédé selon l'une quelconque des revendications 1 à 4.
